(19) **Europäisches Patentamt**
**European Patent Office**
**Office européen des brevets**

(11) **EP 1 673 594 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(21) Anmeldenummer: **04790375.2**

(22) Anmeldetag: **13.10.2004**

(51) Int Cl.:
*G01F 1/66* (2006.01)   *G01F 23/296* (2006.01)

(86) Internationale Anmeldenummer:
**PCT/EP2004/011508**

(87) Internationale Veröffentlichungsnummer:
**WO 2005/038410 (28.04.2005 Gazette 2005/17)**

(54) **VORRICHTUNG ZUR BESTIMMUNG UND/ODER ÜBERWACHUNG DES VOLUMEN- UND/ODER MASSENDURCHFLUSSES EINES MEDIUMS IN EINER ROHRLEITUNG**

DEVICE FOR DETERMINING AND/OR MONITORING THE VOLUME AND/OR MASS FLOW RATE OF A MEDIUM IN A PIPELINE

DISPOSITIF POUR DETERMINER ET/OU SURVEILLER LE DEBIT VOLUMIQUE ET/OU MASSIQUE D'UNE SUBSTANCE DANS UNE CONDUITE TUBULAIRE

(84) Benannte Vertragsstaaten:
**AT BE BG CH CY CZ DE DK EE ES FI FR GB GR HU IE IT LI LU MC NL PL PT RO SE SI SK TR**

(30) Priorität: **15.10.2003 DE 10348676**

(43) Veröffentlichungstag der Anmeldung:
**28.06.2006 Patentblatt 2006/26**

(73) Patentinhaber: **Endress + Hauser Flowtec AG 4153 Reinach BL 1 (CH)**

(72) Erfinder:
• **WIEST, Achim**
  **79576 Weil am Rhein (DE)**
• **BERGER, Andreas**
  **CH-4153 Reinach (CH)**
• **OUDOIRE, Patrick**
  **F-68360 Soultz (FR)**

(74) Vertreter: **Andres, Angelika Maria et al Endress+Hauser (Deutschland) AG+Co. KG PatServe Colmarer Strasse 6 79576 Weil am Rhein (DE)**

(56) Entgegenhaltungen:
WO-A-88/08516   DE-U1- 7 838 154
US-A- 5 438 868   US-A- 5 533 408
US-A- 6 009 760

EP 1 673 594 B1

**Beschreibung**

Die Erfindung betrifft eine Vorrichtung zur Bestimmung und/oder Überwachung des Volumen- und/oder Massendurchflusses eines Mediums, das eine Rohrleitung in einer Strömungsrichtung durchfließt, mit zumindest zwei Ultraschallsensoren, die in einer definierten Meßposition an der Außenwand der Rohrleitung befestigt sind und die wechselweise Ultraschall-Meßsignale aussenden und empfangen, und mit einer Regel-/Auswerteeinheit, die den Volumen- und/oder den Massendurchfluß des Mediums in der Rohrleitung anhand der Laufzeitdifferenz der Ultraschall-Meßsignale in Strömungsrichtung und entgegen der Strömungsrichtung ermittelt.

Clamp-On Ultraschall-Durchflußmeßgeräte der zuvor beschriebenen Art, die den Volumendurchfluß mittels der sog. Laufzeitdifferenz-Methode ermitteln, werden vielfach in der Prozeß- und Automatisierungstechnik eingesetzt. Sie erlauben es, den Volumendurchfluß in einem Behältnis, z.B. in einer Rohrleitung, berührungslos zu bestimmen. Hierzu werden die Ultraschall-Meßsignale unter einem vorgegebenen Winkel in die Rohrleitung, in der sich das Medium befindet, eingestrahlt. Die Meßposition der Ultraschallsensoren an der Rohrleitung ist abhängig von dem Innendurchmesser der Rohrleitung, von der Schallgeschwindigkeit des Mediums, von der Wandstärke der Rohrleitung und von der Schallgeschwindigkeit des Materials der Rohrleitung. Um eine verläßliche Meßgröße für den Durchfluß bereitstellen zu können, müssen diese Parameter bekannt sein.

Bekannt geworden sind Clamp-On Durchflußmeßgeräte, bei denen die Ultraschallwandler von außen an die Rohrleitung mittels eines Spannverschlusses angepreßt werden. Clamp-On Durchflußmeßgeräte sind beispielsweise in der EP 0 686 255 B1, der US-PS 4,484,478 oder der US-PS 4,598,593 beschrieben. Weiterhin ist es bekannt, die Clamp-On Durchflußmeßgeräte über Ketten, Klettbänder oder über Schrauben an der Rohrleitung anzubringen. Es versteht sich von selbst, daß die bekannten Methoden zur Positionierung der Ultraschallsensoren ziemlich zeitaufwendig ist.

Die US 6 009 760 A offenbart eine Durchflußmeßvorrichtung mit je zwei Mikrowellensendern/-empfängern, die in einer definierten Messposition an der Außenwand einer Rohrleitung mittels einer zangenartigen Klemmeinheit befestigt sind.

Die Dokumente US 5 438 868 A und DE 78 38 154 U1 zeigen die Anwendung von Ultraschallsensoren zur Füllstandsmessung in einem zylinderförmigen Behälter bzw. zur Durchflussmessung in einem Schlauch, jeweils in Kombination mit einer zangenartigen Klemmeinheit.

Ultraschallsensoren zur Bestimmung einer Wandstärke sind in den Dokumenten WO 88/08516 A und US 5 533 408 A beschrieben.

Der Erfindung liegt die Aufgabe zugrunde, ein Clamp-On Durchflußmeßgerät vorzuschlagen, das eine schnelle Montage an bzw. eine Demontage von einer Rohrleitung mit einem weitgehend beliebigen Außendurchmesser erlaubt.

Die Aufgabe wird dadurch gelöst, daß die beiden Ultraschallsensoren an einer zangenartigen Klemmeinheit befestigt sind, die derart ausgestaltet ist, daß die Ultraschallsensoren auf die Rohrleitung aufklemmbar sind. Bevorzugt ist die zangenartige Klemmeinheit so ausgestaltet, daß sich die beiden Ultraschallsensoren nach dem Aufklemmen auf die Rohrleitung - und zwar weitgehend unabhängig von deren Außendurchmesser - automatisch in der korrekten Meßposition befinden. Die obere Grenze der Rohrleitung ist lediglich durch die konstruktive Ausgestaltung und insbesondere durch den möglichen Öffnungswinkel der zangenartigen Klemmeinheit vorgegeben.

Eine vorteilhafte Weiterbildung der erfindungsgemäßen Vorrichtung schlägt vor, daß die Klemmeinheit derart ausgestaltet ist, daß die beiden Ultraschallsensoren in der Meßposition in einer Zwei- oder Mehr-Traversenanordnung auf einer zur Längsachse der Rohrleitung im wesentlichen parallelen Mantellinie angeordnet sind. Alternativ ist vorgesehen, daß die Klemmeinheit derart ausgestaltet ist, daß die beiden Ultraschallsensoren in der Meßposition auf entgegengesetzten Seiten der Rohrleitung in einer Ein-Traversenanordnung oder in einer mehrfachen Ein-Traversenanordnung angeordnet sind.

Als besonders einfach wird die Ausgestaltung angesehen, daß die zangenartige Klemmeinheit eine erste Teileinheit und eine zweite Teileinheit umfaßt. Insbesondere besteht die erste Teileinheit aus zwei Hebelarmen, die in ihrem mittleren Bereich über eine Schwenkverbindung miteinander gekoppelt sind. Bevorzugt ist ein erster Drehgeber an der Schwenkverbindung vorgesehen. Dieser Drehgeber dient der Erfassung der Winkelstellung zwischen den beiden Hebelarmen. Anhand der von dem Drehgeber gelieferten Meßwerte ermittelt die Regel-/Auswerteeinheit den Außendurchmesser der Rohrleitung.

Die zweite Teileinheit setzt sich bevorzugt aus folgenden Komponenten zusammen:

- zwei V-förmig angeordnete Führungsschienen, die in ihren verbundenen Endbereichen über eine Schwenkverbindung miteinander gekoppelt sind;
- zwei festklemmbare Schwenkverbindungen, die in den freien Endbereichen der Führungsschienen und in den Endbereichen einer Querstange vorgesehen sind;
- zwei Verbindungsstücke, die starr an den Schwenkverbindungen montiert sind und an denen die Ultraschallsensoren befestigt sind;
- die Querstange, die starr mit dem ersten Hebelarm der ersten Teileinheit verbunden ist;
- eine Halterung, die mit dem zweiten Hebelarm der ersten Teileinheit in Verbindung steht.

Wie bereits an vorhergehender Stelle erwähnt, ist es bei Clamp-On Durchflußmeßgeräten wichtig, die Wandstärke der Rohrleitung für die Berechnung der Laufzeiten der Ultraschall-Meßsignale zu berücksichtigen. Die Wandstärke der Rohrleitung ist entweder bekannt, oder sie läßt sich mittels Ultraschall über einen Ultraschallsensor ermitteln. Daher ist gemäß einer vorteilhaften Ausgestaltung der erfindungsgemäßen Vorrichtung eine Kompensationseinheit vorgesehen, über die sich quasi automatisch die Wandstärke der Rohrleitung kompensieren läßt. Hierzu ist der Kompensationseinheit ein zweiter Drehgeber und ein Längensensor zugeordnet. Der Drehgeber und der Längensensor übermitteln ihre Meßdaten an die Regel-/Auswerteeinheit.

Die Erfindung wird anhand der nachfolgenden Figuren näher erläutert. Es zeigt:

Fig. 1: eine perspektivische Ansicht einer bevorzugten Ausführungsform des erfindungsgemäßen Ultraschall-Durchflußmeßgeräts;

Fig. 2: einen Querschnitt der in Fig. 1 gezeigten Ausführungsform;

Fig. 3: eine zweite Ausführungsform des erfindungsgemäßen Ultraschall-Durchflußmeßgeräts im Querschnitt;

Fig. 4: eine Draufsicht auf die in Fig. 3 gezeigten Ausführungsform;

Fig. 5: ein Blockschaltbild zur Ansteuerung des erfindungsgemäßen Durchflußmeßgeräts.;

Fig. 6: eine schematische Darstellung des Schallpfads eines Ultraschall-Meßsignals;

Fig. 7: eine schematische Darstellung zur Ermittlung der Höhenverstellung des erfindungsgemäßen Durchflußmeßgeräts bei einer zu kompensierenden Wandstärke d;

Fig. 8: eine schematische Darstellung der erfindungsgemäßen Vorrichtung Im Falle der Kompensation einer dünnen Rohrwand $d_1$;

Fig. 9: eine schematische Darstellung der erfindungsgemäßen Vorrichtung im Falle der Kompensation einer dikken Rohrwand $d_2$;

Fig. 10: eine schematische Darstellung der Winkelstellung der Schenkel der zangenartigen Klemmeinheit bei einem stark brechenden Meßmedium.

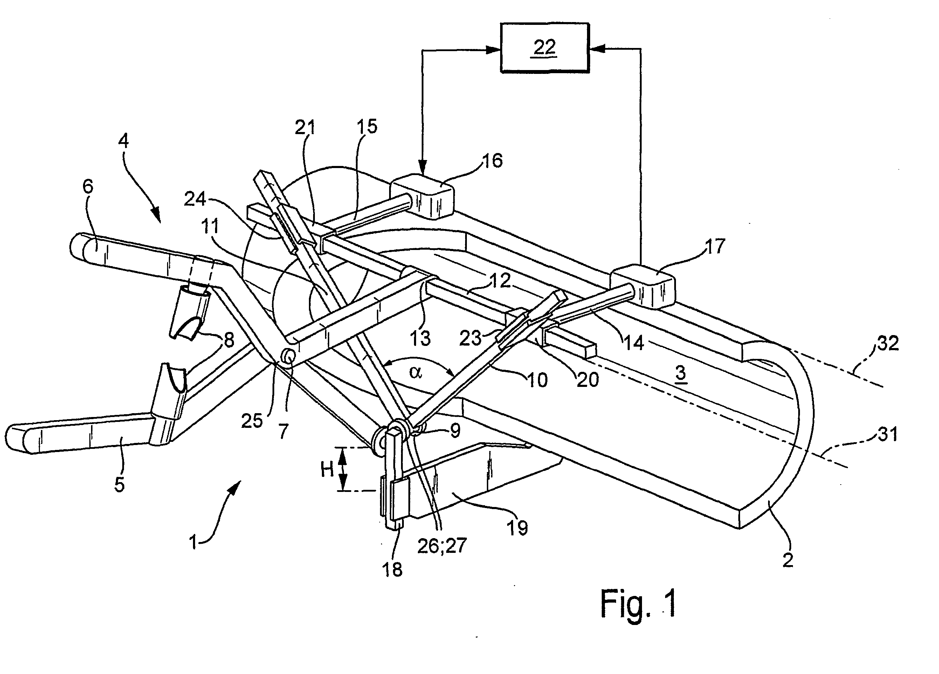

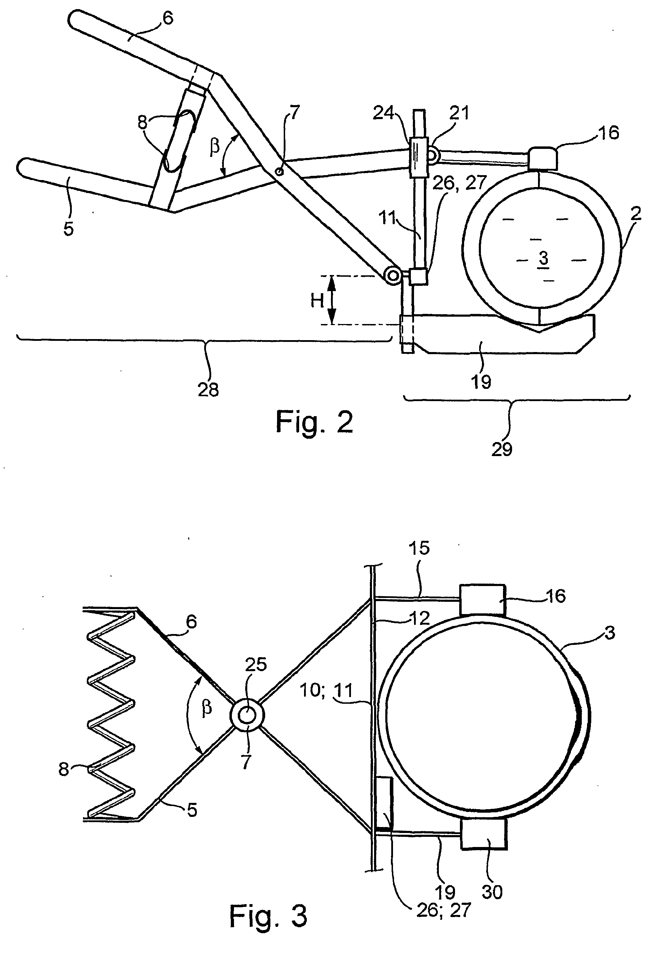

Fig. 1 zeigt eine perspektivische Ansicht einer bevorzugten Ausführungsform des erfindungsgemäßen Ultraschall-Durchflußmeßgeräts 1, das den Volumenoder Massendurchfluß des Mediums 3 durch die Rohrleitung 2 bestimmt und/oder überwacht. In Fig. 2 ist ein Querschnitt der in Fig. 1 gezeigten Ausführungsform zu sehen. Das Ultraschall-Durchflußmeßgerät 1 arbeitet nach dem Laufzeitdifferenz-Prinzip: Die Differenz der Laufzeiten von Ultraschall-Meßsignalen, die ein in der Rohrleitung 2 strömendes Medium 3 in Strömungsrichtung und entgegen der Strömungsrichtung queren, ist proportional zur Strömungsgeschwindigkeit des Mediums 3. Bei bekanntem Innendurchmesser der Rohrleitung 2 läßt sich der Volumendurchfluß bestimmen. Ist weiterhin die Dichte des strömenden Mediums 3 bekannt, so läßt sich der Massendurchfluß durch die Rohrleitung 2 ermitteln.

Im gezeigten Fall werden die Ultraschall-Meßsignalen von den beiden Ultraschallsensoren 16, 17 abwechselnd ausgesendet und empfangen. Die beiden Ultraschallsensoren 16, 17 sind in der Meßposition - wenn also ein maximaler Anteil der von einem ersten Ultraschallsensor 16, 17 ausgesendeten Meßsignale in dem zweiten Ultraschallsensor 17; 16 empfangen wird - auf einer zur Längsachse parallel verlaufenden Mantellinie der Rohrleitung 2 positioniert. Die beiden Ultraschallsensoren 16, 17 befinden sich in einer sog. Zweitraversenanordnung. Die Ermittlung der Laufzeitdifferenz der Ultraschall-Meßsignale und die Bestimmung des Volumen- oder Massendurchflusses erfolgt in der Regel-/Auswerteeinheit 22.

Das erfindungsgemäße Ultraschall-Durchflußmeßgerät 1 läßt sich über einen konstruktiv sehr einfachen Mechanismus an der Rohrleitung 2 in der korrekten Meßposition anbringen. Insbesondere läßt sich der Mechanismus problemlos an weitgehend beliebige Außendurchmesser der Rohrleitung 2 adaptieren. Voraussetzung hierfür ist in erster Näherung lediglich, daß die Schallgeschwindigkeit bzw. der Brechungsindex des Mediums 3 bekannt ist. Bevorzugt ist der Mechanismus so ausgestaltet, daß sich die korrekte Meßposition bei unterschiedlichen Außendurchmessern der Rohrleitung 2 automatisch einstellt. Im gezeigten Fall ist der Mechanismus so ausgestaltet, daß die Klemmwirkung über die beiden Ultraschallsensoren 16, 17, die Halterung 19 und die Druckfeder 8, die zwischen den beiden Hebelarmen 4, 5 angeordnet ist, erzeugt wird. Selbstverständlich ist es auch möglich, das erfindungsgemäße Ultraschall-Durchflußmeßgerät 1 so auszugestalten, daß die Ultraschallsensoren 16, 17 in der Meßposition in gegenüberliegenden Bereichen der Rohrleitung 2 in einer sog. Eintraversenanordnung montiert sind. Eine andere Anordnungsvariante stellt die sog. doppelte oder mehrfache Eintraversenanordnung dar.

Betrachten wir Fig. 1 etwas näher. Wie bereits gesagt, ist eine wesentliche Komponente des erfindungsgemäßen Durchflußmeßgeräts 1 die zangenartige Klemmeinheit 4, über die sich die Ultraschallsensoren 16, 17 in einfacher Art und Weise an der Rohrleitung 3 befestigen lassen. Die Klemmeinheit 4 besteht aus einer ersten Teileinheit 28 und aus einer zweiten Teileinheit 29. Die erste Teileinheit 28 weist zwei in einer Ebene angeordnete Hebelarme 5, 6 auf, die über die Schwenkverbindung 7 beweglich zueinander gelagert sind. Der Aufbau der ersten Teileinheit 28 der Klemmeinheit 4 entspricht dem Aufbau einer Schere oder Zange; die zweite Teileinheit 29 entspricht im wesentlichen den Griffteilen einer Zange.

Die zweite Teileinheit 29 setzt sich im gezeigten Fall aus folgenden Komponenten zusammen: zwei V-förmig angeordneten Führungsschienen 10, 11, die in ihren verbundenen Endbereichen über die Schwenkverbindung 9 miteinander gekoppelt sind, zwei Schwenkverbindungen 20, 23; 21, 24, die in den 'freien' Endbereichen der Führungsschienen 10, 11 vorgesehen sind, zwei Verbindungsstücke 14, 15, an denen die Ultraschallsensoren 16, 17 befestigt sind, die Querstange 12, und die Halterung 19. Die Schwenkverbindungen 20, 23; 21, 24 sind über jeweils zwei schwenkbar und festklemmbar angeordnete Rohrstücke realisiert. Jeweils ein Rohrstück 23, 24 ist in einem Endbereich einer jeden Führungsschiene 10, 11 befestigt. Diese Rohrstücke 23, 24 sind schwenkbar und arretierbar mit den Rohrstücken 20, 21 verbunden, die an der Querstange 12 beweglich angeordnet sind. Die Rohrstücke 20, 23; 21, 24 lassen sich in unterschiedlichen Winkelstellungen zueinander arretieren. Zwecks korrekter Positionierung der beiden Ultraschallsensoren 16, 17 zueinander wird der Winkel α zwischen den beiden Führungsschienen 10, 11 in Abhängigkeit von dem in der Rohrleitung 2 strömenden Medium 3 und von dem vorgegebenen Innendurchmesser der Rohrleitung 3 so eingestellt, daß die Ultraschall-Meßsignale, die von einem Ultraschallsensor 16; 17 ausgesendet werden, im jeweils anderen Ultraschallsensor 17; 16 empfangen werden.

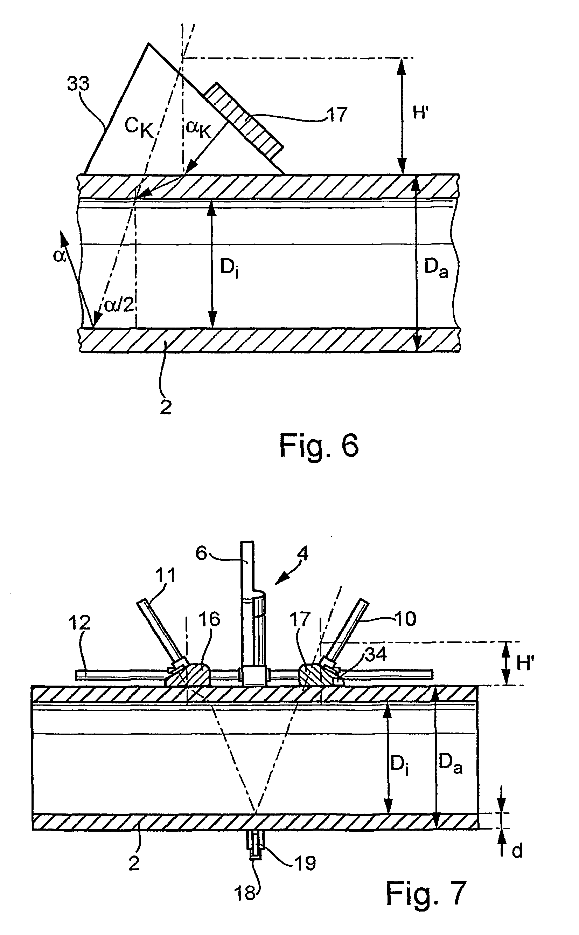

Zur Erkennung des Winkels β ist im Bereich der Schwenkverbindung 7, über die die beiden Führungsschienen 10, 11 miteinander verbunden sind, ein Drehgeber 25 vorgesehen. Anhand der vom Drehgeber gelieferten Daten ermittelt die Regel-/Auswerteeinheit 22 den Außendurchmesser $D_a$ der Rohrleitung. Der entsprechende Sachverhalt ist in Fig. 6 skizziert. Durch den Öffnungswinkel β und die feste Länge der Schenkel der zangenartigen Klemmeinheit 4 kann diese Erfassung in eindeutiger Weise erfolgen. Mit der Kenntnis des Durchmessers $D_a$ und der Wandstärke d der Rohrleitung 2 läßt sich der Innendurchmesser $D_i$ und somit die innere Fläche der Rohrleitung 2 berechnen. Es ist nach einer vorteilhaften Ausgestaltung der erfindungsgemäßen Vorrichtung darüber hinaus vorgesehen, daß die Ultraschallsensoren so ausgebildet sind, daß sie, z.B. in einem Gehäuse angeordnet, sowohl die Wandstärkemessung d (durch Messung der Schallgeschwindigkeit auf dem senkrechten Schallweg) und die Durchflußmessung (durch Messung der Schallgeschwindigkeit auf dem schrägen Schallpfad) durchführen können. Konkret läßt sich diese Ausgestaltung über zwei Piezoelemente realisieren, die über unterschiedliche Winkeln in die Rohrleitung 2 einstrahlen.

Die Ermittlung der für die Durchflußmessung relevanten Größen erfolgt also nahezu automatisch: Der Bediener braucht in dieser zuletzt genannten bevorzugten Ausgestaltung also keine zusätzliche Information über die Geometrie der Rohrleitung 2 einzugeben. Es genügt in dieser Ausgestaltung, wenn der Regel-/Auswerteeinheit 22 die Information über das Material zur Verfügung gestellt wird, aus dem die Rohrwand gefertigt ist. Die Info über die entsprechende Schallgeschwingkeit $c_R$ ist dann beispielsweise in einer Tabelle in der Regel-/Auswerteeinheit 22 hinterlegt. Somit läßt sich die Wandstärke d der Rohrleitung 2 aus der gemessenen Laufzeit T zwischen zwei Echosignalen, die an gegenüberliegenden Bereichen der Rohrwand reflektiert werden, und der Schallgeschwingkeit $c_R$ nach der folgenden Formel berechnen:

$$d = c_R * T / 2$$

Mit der Kenntnis des Außendurchmessers $D_a$ der Rohrleitung 2, des Innendurchmessers $D_i$ der Rohrleitung 2 und der Wandstärke d der Rohrleitung 2 ist es nachfolgend möglich, anhand der Laufzeit eines Echosignals $T_M$, das wiederum an der dem Ultraschallsensor gegenüberliegenden Rohrwand reflektiert wird, analog zur Bestimmung der Wandstärke d auf die Schallgeschwindigkeit des Mediums $c_M$ zurückzuschließen. Die entsprechende Formel lautet:

$$c_M = \frac{d_i}{T_M / 2}$$

Somit läßt sich der Winkel α nach folgender Formel bestimmen:

$$\alpha = 2 * a \sin\left( \frac{c_M}{c_K} * \sin \alpha_K \right)$$

Hierbei ist

$\alpha_K$ : der Winkel, unter dem das Ultraschallsignal im Ultraschallsensor zum Lot auf die Austrittsfläche sendet, wobei dieser Winkel üblicherweise vom Hersteller mitgeteilt wird.

$c_K$ : die Schallgeschwindigkeit des Vorlaufkörpers 33 des Ultraschallsensors 16; 17; auch diese ist aus den Herstellerdaten bekannt.

Erfindungsgemäß stellt sich der Abstand der Ultraschallsensoren 16, 17 entlang der Mantellinie 32 der Rohrleitung 2 automatisch in Abhängigkeit von dem Au-

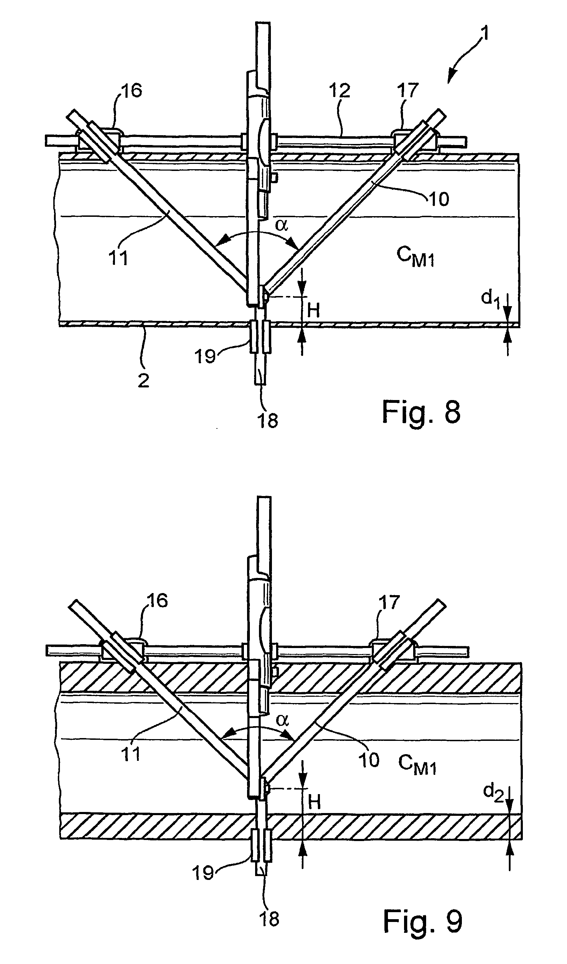

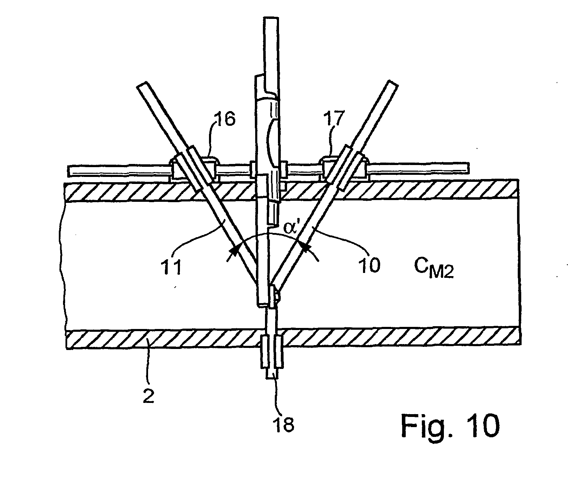

ßendurchmesser $D_\alpha$ der Rohrleitung 2 ein, sobald das Ultraschall-Durchflußmeßgerät 1 an der Rohrleitung 2 festgeklemmt ist. Hierzu sind die Rohrstücke 23, 24, die an den Führungsschienen 10, 11 befestigt sind, unter dem Winkel $\alpha$ starr mit den Rohrstücken 20, 21, die auf der Querstange 12 bewegbar angeordnet sind, verbunden. Der Winkel $\alpha$ der beiden Führungsschienen 10, 11 zu der Querstange 12 ist so eingestellt, daß die korrekte Meßposition der Ultraschallsensoren 16, 17 in Abhängigkeit von einem vorgegebenen Außendurchmesser der Rohrleitung 2 und in Abhängigkeit von der Schallgeschwindigkeit des in der Rohrleitung 2 strömenden Mediums 3 erreicht ist. Mit den beiden auf der Querstange 12 beweglich angeordneten Rohrstücken 20, 21 sind die Verbindungsstücke 14, 15, die die Ultraschallsensoren 16, 17 tragen, starr verbunden. Dieser Sachverhalt läßt sich anhand eines Vergleichs der in den beiden Figuren Fig. 9 und Fig. 10 dargestellten Klemmvorrichtung deutlich erkennen.

Die Querstange 12 ist in ihrem mittleren Bereich starr mit dem Endbereich des Hebelarms 5 verbunden. Über die Verbindung der Rohrstücke 20, 21 mit den Verbindungsstücken 14, 15 und den Ultraschallsensoren 16, 17 wird erreicht, daß eine Änderung der Winkelstellung der beiden Führungsschienen 10, 11 in eine translatorische Bewegung der Verbindungsstücke 14, 15 und der damit fest verbundenen Ultraschallsensoren 17, 18 relativ zu der Querstange 12 umgesetzt wird. Ist der Außendurchmesser $D_\alpha$ der Rohrleitung 3 kleiner als in der Fig. 1 gezeigt, so werden die beiden Ultraschallsensoren 16, 17 beim Aufklemmen der Klemmeinheit 4 auf die Rohrleitung 2 automatisch näher zueinander positioniert. Ist der Außendurchmesser $D_\alpha$ größer, so werden die beiden Ultraschallsensoren 16, 17 automatisch weiter auseinander gefahren. Ist der Innendurchmesser der Rohrleitung 2 und der Brechungsindex des Mediums 3 bekannt, so läßt sich das erfindungsgemäße Clamp-On Ultraschall-Durchflußmeßgerät 1 an Rohrleitungen 2 mit beliebigen Durchmessern in kürzester Zeit in die korrekte Meßposition bringen. Der mögliche Durchmesser ist lediglich durch die Kontruktionsmaße der erfindungsgemäßen Vorrichtung begrenzt.

Die Klemmeinheit 4 wird in der Meßposition an der Rohrleitung 2 über die von der Druckfeder 8 ausgeübte Rückstellkraft fixiert. Die Druckfeder 8 ist im Bereich der beiden freien Endbereiche der beiden Hebelarme 5, 6 angeordnet.

Zwecks Berechnung der korrekten Laufzeit der Ultraschall-Meßsignale ist es erforderlich, die Wandstärke d der Rohrleitung 2 zu berücksichtigen. Die Kompensation der Wandstärke der Rohrleitung 2 erfolgt bei der in Fig. 1 gezeigten Ausführungsform der erfindungsgemäßen Vorrichtung über eine Höhenverstellung der Halterung 19 und damit über eine Höhenverstellung der beiden im Winkel $\alpha$ angeordneten Führungsschienen 10, 11. Hierzu ist im Bereich der Schwenkverbindung 9 vorzugsweise ein Längensensor 27 vorgesehen. Ist die Brechung in der Rohrwand z.B. über die Schallgeschwindigkeit $c_R$ und Dicke d der Rohrwand bekannt, so kann die zu kompensierende Höhe H nach folgender Formel erreicht werden:

$$H = H' + d$$

Der entsprechende Sachverhalt ist in Fig. 6 skizziert. Die zu kompensierende Höhe H kann mit einem Linearantrieb automatisch und/oder mit einem Längensensor (Widerstandssensor) oder einer Meßskala manuell eingestellt werden. Für eine manuelle Einstellung wird noch eine Feststellschraube oder Arretierung an der korrekten Position benötigt. Ein Vergleich der beiden Figuren Fig. 8 und Fig. 9 zeigt die zu kompensierende Höhe H bei zwei unterschiedlichen Wandstärken $d_1$, $d_2$.

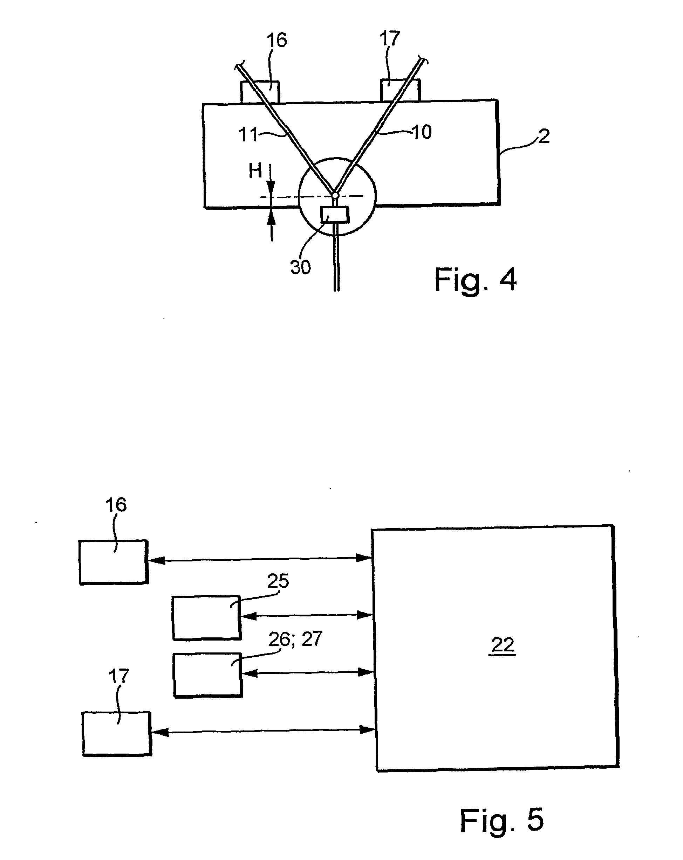

Fig. 3 zeigt eine zweite Ausgestaltung des erfindungsgemäßen Ultraschall-Durchflußmeßgeräts 1 im Querschnitt; Fig. 4 zeigt die Ausgestaltung in Seitenansicht. Der wesentliche Unterschied zu dem in den Figuren Fig. 1 und Fig. 2 dargestellten Ultraschall-Durchflußmeßerät 1 besteht bei dieser Ausgestaltung darin, daß ein dritter zusätzlicher Ultraschallsensor 30 im Bereich der Halterung 19 angeordnet.

Fig. 5 zeigt ein Blockschaltbild zur Ansteuerung des erfindungsgemäßen Durchflußmeßgeräts 1. Die Regel-/Auswerteeinheit 22 triggert die Aussendung der Ultraschall-Meßsignale der Ultraschallsensoren 16, 17 und mißt die Zeit, bis die Ultraschall-Meßsignale im jeweils anderen Ultraschallsensor 17; 16 empfangen werden. Anhand der Differenz der Laufzeiten der Ultraschall-Meßsignale in Strömungsrichtung und entgegen der Strömungsrichtung ermittelt die Regel-/Auswerteeinheit 22 den Volumen- und/oder Massendurchfluß des Mediums 3 durch die Rohrleitung 2.

Zusätzlich erhält die Regel-/Auswerteeinheit 22 von dem Drehgeber 26 die Information über den Winkel $\alpha$ zwischen den beiden Führungsschienen 10, 19. Weiterhin wird der Regel-/Auswerteeinheit 22 die Information über die Höhenstellung der Kompensationseinheit für die Wandstärke d der Rohrleitung 2 von dem Längensensor 27 zur Verfügung gestellt. Weiterhin wird der Regel-/Auswerteeinheit 22 die Information über den Durchmesser $D_a$ der Rohrleitung 2 über den Winkel $\beta$ und den Drehgeber 25 zur Verfügung gestellt.

**Bezugszeichenliste**

| 1 | Ultraschall-Durchflußmeßgerät |
| 2 | Rohrleitung |
| 3 | Medium |

| | |
|---|---|
| 4 | Klemmeinheit |
| 5 | Erster Hebelarm |
| 6 | Zweiter Hebelarm |
| 7 | Erste Schwenkverbindung |
| 8 | Druckfeder |
| 9 | Zweite Schwenkverbindung |
| 10 | Erste Führungsschiene |
| 11 | Zweite Führungsschiene |
| 12 | Querstange |
| 13 | Halteelement |
| 14 | Verbindungsstück |
| 15 | Verbindungsstück |
| 16 | Ultraschallsensor |
| 17 | Ultraschallsensor |
| 18 | Rohrstück |
| 19 | Halterung |
| 20 | Rohrstück |
| 21 | Rohrstück |
| 22 | Regel-/Auswerteeinheit |
| 23 | Rohrstück |
| 24 | Rohrstück |
| 25 | Drehgeber |
| 26 | Drehgeber |
| 27 | Längensensor |
| 28 | Erster Teilelement |
| 29 | Zweites Teilelement |
| 30 | Ultraschallsensor |
| 31 | Längsachse |
| 32 | Mantellinie |

| | |
|---|---|
| 33 | Vorlaufkörper |
| 34 | Ultraschallsensor |

**Patentansprüche**

1. Vorrichtung zur Bestimmung und/oder Überwachung des Volumen- und/ oder Massendurchflusses eines Mediums (3), das eine Rohrleitung (2) in einer Strömungsrichtung (S) durchfließt, mit zumindest zwei Ultraschallsensoren (16, 17), die in einer definierten Meßposition an der Außenwand der Rohrleitung (2) befestigt sind und die wechselweise Ultraschall-Meßsignale aussenden und empfangen, und mit einer Regel-/Auswerteeinheit (22), die den Volumen- und/oder den Massendurchfluß des Mediums (3) in der Rohrleitung(2) anhand der Laufzeitdifferenz der Ultraschall-Meßsignale in Strömungsrichtung (S) und entgegen der Strömungsrichtung (S) ermittelt,
**dadurch gekennzeichnet,**
**daß** die beiden Ultraschallsensoren (16, 17) an einer zangenartigen Klemmeinheit (4) befestigt sind, die derart ausgestaltet ist, daß die Ultraschallsensoren (16, 17) durch Aufklemmen auf die Rohrleitung (2) in der Meßposition anbringbar sind, wobei die Klemmeinheit (4) eine erste Teileinheit (28) und eine zweite Teil-einheit (29) umfaßt, wobei die erste Teileinheit (28) aus zwei Hebelarmen (5, 6) besteht, die in ihrem mittleren Bereich über eine Schwenkverbindung (7) miteinander gekoppelt sind und wobei die zweite Teileinheit (29) folgende Komponenten aufweist: zwei V-förmig angeordnete Führungsschienen (10, 11), die in ihren verbundenen Endbereichen über die Schwenkverbindung (9) miteinander gekoppelt sind, zwei festklemmbare Schwenkverbindungen (20, 23; 21, 24), die in den freien Endbereichen der Führungsschienen (10, 11) und in den Endbereichen einer Querstange (12) vorgesehen sind, zwei Verbindungsstücke (14, 15), an denen die Ultraschallsensoren 16, 17 befestigt sind, die Querstange (12), die starr mit dem ersten Hebelarm (5) der zweiten Teileinheit (29) verbunden ist, und eine Halterung (19), die mit dem zweiten Hebelarm (6) der ersten Teileinheit (28) in Verbindung steht.

2. Vorrichtung nach Anspruch 1,
**dadurch gekennzeichnet,**
**daß** die Klemmeinheit (4) derart ausgestaltet ist, daß die beiden Ultraschallsensoren (16, 17) in der Meßposition in einer Zwei- oder Mehr-Traversenanordnung auf einer zur Längsachse (31) der Rohrleitung (2) im wesentlichen parallelen Mantellinie (32) angeordnet sind.

3. Vorrichtung nach Anspruch 1,
**dadurch gekennzeichnet,**

**daß** die Klemmeinheit (4) derart ausgestaltet ist, daß die beiden Ultraschallsensoren (16, 17) in der Meßposition auf entgegengesetzten Seiten der Rohrleitung (2) in einer Ein-Traversenanordnung oder in einer mehrfachen Ein-Traversenanordnung angeordnet sind.

4. Vorrichtung nach Anspruch 1,
   **dadurch gekennzeichnet,**
   **daß** ein erster Drehgeber (25) vorgesehen ist, der die Winkelstellung zwischen den beiden Hebelarmen (5, 6) bestimmt, wobei die Regel-/Auswerteeinheit (22) anhand der gelieferten Winkelstellung der beiden Hebelarme (5, 6) den Außendurchmesser ($D_\alpha$) der Rohrleitung (2) ermittelt.

5. Vorrichtung nach Anspruch 1,
   **dadurch gekennzeichnet,**
   **daß** zumindest ein weiterer Ultraschallsensor (34) vorgesehen ist, der die Wandstärke (d) der Rohrleitung (2) bestimmt.

6. Vorrichtung nach Anspruch 5,
   **dadurch gekennzeichnet,**
   **daß** eine Kompensationseinheit (18, 19) vorgesehen ist, die die Dicke (d) der Rohrwand der Rohrleitung (2) durch entsprechende Höhenverstellung (H) der zangenartigen Klemmeinheit (4) automatisch kompensiert, wobei der Kompensationseinheit (18, 19) ein zweiter Drehgeber (26), welcher Informationen über den Winkel ($\alpha$) zwischen den beiden Führungsschienen (10, 11) bereitstellt, und ein Längensensor (27) zugeordnet ist, über die der Einfluß der Rohrwand auf die Laufzeit der Ultraschall-Meßsignale automatisch kompensiert wird.

**Claims**

1. Unit for determining and/or monitoring the volume flow and/or the mass flow of a medium (3) which flows through a pipe (2) in a flow direction (S), with at least two ultrasonic sensors (16, 17) which are secured at a defined measuring position on the outer wall of the pipe (2) and which alternately emit and receive ultrasonic measuring signals, and with a control/evaluation unit (22) which determines the volume flow and/or the mass flow of the medium (3) in the pipe (2) using the difference in the time-of-flight of the ultrasonic measuring signals in the flow direction (S) and against the flow direction (S),
   **characterized in that**
   the two ultrasonic sensors (16, 17) are secured to a gripper-like clamping unit (4) which is designed in such a way that the ultrasonic sensors (16, 17) can be brought to the measuring position by fitting them on the pipe (2), wherein the clamping unit (4) comprises a first subunit (28) and a second subunit (29), wherein the first subunit (28) consists of two lever arms (5, 6) which are coupled together in the middle via a swivel connection (7), and wherein the second subunit (29) has the following components: two guide rails (10, 11) which are arranged in a V shape and are coupled together at their connected ends via the swivel connection (9); two swivel connections (20, 23; 21, 24) which can be clamped in place and are provided at the free ends of the guide rails (10, 11) and at the end sections of a cross rod (12); two connection elements (14, 15) to which the ultrasonic sensors (16, 17) are secured; the cross rod (12) which is rigidly connected to the first lever arm (5) of the second subunit (29); and a holder (19) which is connected to the second lever arm (6) of the first subunit (28).

2. Unit as claimed in Claim 1,
   **characterized in that**
   the clamping unit (4) is designed in such a way that the two ultrasonic sensors (16, 17) are arranged in the measuring position in a double-traverse or multi-traverse arrangement on a surface line (32) which is primarily parallel to the longitudinal axis (31) of the pipe (2).

3. Unit as claimed in Claim 1,
   **characterized in that**
   the clamping unit (4) is designed in such a way that the two ultrasonic sensors (16, 17) are arranged in the measuring position on opposite sides of the pipe (2) in a single-traverse arrangement or in a multiple single-traverse arrangement.

4. Unit as claimed in Claim 1,
   **characterized in that**
   a first rotary encoder (25) is provided which determines the angularity between the two lever arms (5, 6), wherein the control/evaluation unit (22) determines the outer diameter ($D_o$) of the pipe (2) using the angularity provided for the two lever arms (5, 6).

5. Unit as claimed in Claim 1,
   **characterized in that**
   at least one additional ultrasonic sensor (34) is provided which determines the wall thickness (d) of the pipe (2).

6. Unit as claimed in Claim 5,
   **characterized in that**
   a compensation unit (18, 19) is provided which automatically compensates for the thickness (d) of the wall of the pipe (2) by appropriately adjusting the height (H) of the gripper-like clamping unit (4), wherein a second rotary encoder (26) is assigned to the compensation unit (18, 19), said encoder providing information on the angle ($\alpha$) between the two guide rails (10, 11), and a length sensor (27) is assigned via which the influence of the pipe wall on the time-of-flight of the ultrasonic measuring signals is automatically compensated.

## Revendications

1. Dispositif destiné à la détermination et/ou la surveillance du débit volumique ou massique d'un produit (3), qui circule dans une conduite (2) dans un sens d'écoulement (S), avec au moins deux capteurs à ultrasons (16, 17), qui sont fixés dans une position de mesure définie, sur la paroi extérieure de la conduite (2), et qui émettent et reçoivent à tour de rôle des signaux de mesure ultrasonores, et avec une unité de régulation / d'exploitation (22), qui détermine le débit volumique et/ou massique du produit (3) dans la conduite (2) au moyen de la différence du temps de propagation des signaux de mesure ultrasonores dans le sens d'écoulement (S) et dans le sens opposé à l'écoulement (S),
**caractérisé en ce**
**que** les deux capteurs à ultrasons (16, 17) sont fixés sur une unité de serrage (4) en forme de pince, laquelle est conçue de telle manière que les capteurs à ultrasons (16, 17) puissent être installés en position de mesure par serrage sur la conduite (2), l'unité de serrage (4) comprenant une première sous-unité (28) et une deuxième sous-unité (29), la première sous-unité (28) étant constituée de deux bras de levier (5, 6), qui sont couplés entre eux dans leur zone médiane par l'intermédiaire d'une liaison pivotante (7), et la deuxième sous-unité (29) présentant les composants suivants : deux rails de guidage (10,11) disposés en V, qui sont couplés entre eux dans leurs zones d'extrémité reliées par l'intermédiaire d'une liaison pivotante (9), deux liaisons pivotantes (20, 23 ; 21, 24) pouvant être bloquées, qui-sont prévues dans les zones d'extrémité libres des rails - de guidage (10, 11) et dans les zones d'extrémité d'une traverse (12), deux pièces de liaison (14, 15), sur lesquelles sont fixés les capteurs à ultrasons (16, 17), la traverse (12), qui est reliée de façon rigide avec le premier bras de levier (5) de la deuxième sous-unité (29), et une fixation (19), laquelle est reliée avec le deuxième bras de levier (6) de la première sous-unité (28).

2. Dispositif selon la revendication 1,
**caractérisé en ce**
**que** l'unité de serrage (4) est conçue de telle manière à ce que les deux capteurs à ultrasons (16, 17) soient disposés dans la position de mesure, dans une configuration à deux ou plusieurs traverses, sur un axe longitudinal (31) de la conduite (2), pour l'essentiel parallèlement à la génératrice (32).

3. Dispositif selon la revendication 1,
**caractérisé en ce**
**que** l'unité de serrage (4) est conçue de telle manière à ce que les deux capteurs à ultrasons (16, 17) soient disposés dans la position de mesure, sur des côtés opposés de la conduite (2), dans une configuration à une traverse ou dans une configuration multiple à une traverse.

4. Dispositif selon la revendication 1,
**caractérisé en ce**
**qu'**est prévu un premier codeur (25), qui détermine la position angulaire entre les deux bras de levier (5, 6), l'unité de régulation / d'exploitation (22) déterminant le diamètre extérieur ($D_0$) de la conduite (2) au moyen de la position angulaire fournie des deux bras de levier (5, 6).

5. Dispositif selon la revendication 1,
**caractérisé en ce**
**qu'**est prévu au moins un autre capteur à ultrasons (34), qui détermine l'épaisseur de paroi (d) de la conduite (2).

6. Dispositif selon la revendication 5,
**caractérisé en ce**
**qu'**est prévue une unité de compensation (18, 19), qui compense automatiquement l'épaisseur (d) de la paroi de la conduite (2) grâce à un réglage approprié de la hauteur (H) de l'unité de serrage (4) en forme de pince, un deuxième codeur angulaire (26), qui met à disposition des informations sur l'angle ($\alpha$) entre les deux rails de guidage (10, 11), et un capteur de longueur étant attribués à l'unité de compensation (18, 19), par l'intermédiaire desquels l'influence de la paroi de conduite sur le temps de propagation des signaux de mesure ultrasonores est compensée automatiquement.

Fig. 1

Fig. 2

Fig. 3

Fig. 4

Fig. 5

33

$C_K$  $\alpha_K$  17

H'

$\alpha$

$\alpha/2$

$D_i$  $D_a$

2

## Fig. 6

6  4

11  10

12  16  17  34

H'

$D_i$  $D_a$

2  19  d

18

## Fig. 7

Fig. 8

Fig. 9

α'

11    10    C$_{M2}$

16    17

18

2

Fig. 10

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686255 B1
- US PS4484478 A
- US PS4598593 A
- US 6009760 A
- US 5438868 A
- DE 7838154 U1
- WO 8808516 A
- US 5533408 A